# EUROPÄISCHE PATENTANMELDUNG

(11) **EP 2 220 923 A1**
(43) Veröffentlichungstag der Anmeldung: **25.08.2010**
(21) Anmeldenummer: 10154268.6
(22) Anmeldetag: 22.02.2010
(51) Int. Cl.: A01B 63/24, A01C 7/20

(54) **Bodenbearbeitungseinrichtung mit Scheibenscharen oder Meißelscharen**

(30) Priorität: 20.02.2009 DE 102009009763
(71) Anmelder: Kongskilde Industries A/S, 4180 Sorö (DK)
(72) Erfinder: Rux, Stefan, 59505, Bad Sassendorf (DE); Brockmöller, Fritz, 29683, Fallingbostel (DE)
(74) Vertreter: Einsel, Martin

(57) **Zusammenfassung**

Eine Bodenbearbeitungseinrichtung mit Scheibenscharen besitzt eine Einrichtung zur Einstellung der Arbeitstiefe der Scheibenscharen (15). Ein äußeres Rohr (21) und ein inneres Rohr (31) sind vorgesehen, die relativ zueinander verschiebbar sind. An dem äußeren Rohr (31) sind die Scheibenscharen (15) um eine horizontale Achse drehbar angeordnet. An dem inneren Rohr (31) sind ein oder mehrere Stützräder (35) angeordnet, die auf einer Bodenoberfläche (10) abrollen. Das äußere Rohr (21) und das innere Rohr (31) schließen einen Winkel mit der Bodenoberfläche (10) ein. Die Verschiebung des inneren Rohres (31) im äußeren Rohr (21) ist mittels einer Einstelleinrichtung (41, 42) einstellbar.

## Beschreibung

Die Erfindung betrifft eine Bodenbearbeitungseinrichtung mit Scheibenscharen oder Meißelscharen und mit einer Einrichtung zur Begrenzung der Arbeitstiefe der Scheibenschare.

Bodenbearbeitungseinrichtungen sind beispielsweise Sämaschinen. Sie dienen dazu, Saat in den Boden einzubringen. Die Sämaschinen sind dabei mit Säscharen ausgerüstet, das sind Elemente, die in den Boden eindringen und diesen verdrängen oder auswerfen.

Als Säschare werden Meißelsäschare oder Scheibenschare eingesetzt.

Durch die Scheibenschare greift die Sämaschine in den Boden ein und ermöglicht es, die Saat in einer von den Scheibenscharen erzeugten Saattiefe abzulegen. Die Einstellung dieser Sätiefe oder Saattiefe ist von Interesse, da sie abhängig vom Saatgut, vom Boden und anderen äußeren Randbedingungen durch den Benutzer einstellbar sein sollte.

Sämaschinen mit Scheibenscharen, die eine einstellbare Saattiefe ermöglichen, sind beispielsweise bekannt aus der DE 694 20 316 T2 und der DE 101 41 232 A2. Mittels Lenkern sind nebeneinander höhenbeweglich mehrere Tragräder angeordnet, die jeweils den Scheibenscharen der Sämaschine zugeordnet sind. Die Tragräder laufen auf dem Boden und bestimmen die Eindringtiefe der ihnen zugeordneten Scheibenscharen in den Boden.

Neben Sämaschinen mit Scheibenscharen gibt es auch Sämaschinen, die mit Meißelsäscharen arbeiten. Derartige Sämaschinen sind beispielsweise aus der DE 195 41 576 A1, der DE 103 47 142 A2 , der DE 10 2007 011 752 A1 und der EP 0 206 848 A1 bekannt. Auch diese Sämaschinen arbeiten mit Tiefenführungs- und/oder Druckrollen, welche auf dem zu bearbeitenden Boden abrollen. Es wird angestrebt, dass diese Tiefenführungsrollen zugleich die von den Säscharen zur Schaffung der Säfurche ausgeworfenen Bodenpartikel wieder in die Säfurche zurückzuführen, was jedoch nur teilweise gelingt.

Die Eindringtiefe der Säschare wird dabei über eine parallelogrammartige Halterung festgelegt, die mehrere Streben aufweist, die an einem Rahmen angelengt sind und die Scharhalter der Meißelsäschare tragen. Auch die Tiefenführungs- bzw. Druckrollen sind an dieser parallelogrammartigen Halterung befestigt.

Diese bekannten Sämaschinen besitzen zwar eine einstellbare Saattiefe, sind jedoch recht kompliziert zu bedienen. Zu berücksichtigen ist ja, dass die Verstellung oder Einstellung der Saattiefe von dem Benutzer gegebenenfalls während seiner Tätigkeit auf freiem Feld vorgenommen werden muss, also auch bei ungünstiger Witterung und ohne Unterstützung etwa von Werkzeug, soweit er es nicht zu diesem Zweck auf seiner Sämaschine mitführt. Außerdem muss diese Einstellbarkeit auch nach mehreren Jahren Benutzung noch möglich sein und auch dann noch einfach und praktikabel sein.

Aufgabe der Erfindung ist es daher, eine gattungsgemäße Bodenbearbeitungseinrichtung, beispielsweise eine Sämaschine, vorzuschlagen, die eine einfache Einstellbarkeit der Saattiefe ermöglicht.

Diese Aufgabe wird erfindungsgemäß bei einer gattungsgemäßen Bodenbearbeitungseinrichtung mit Scheibenscharen dadurch gelöst, ein äußeres Rohr und ein inneres Rohr vorgesehen sind, die relativ zueinander verschiebbar sind, dass an dem äußeren Rohr die Scheibenschare mittelbar oder unmittelbar angebracht und um eine horizontale Achse drehbar angeordnet sind, dass an dem inneren Rohr ein oder mehrere Stützräder mittelbar oder unmittelbar angebracht und angeordnet sind, die auf einer Bodenoberfläche abrollen, dass das äußere Rohr und das innere Rohr selbst oder über Umlenkelemente einen Winkel α mit der Bodenoberfläche einschließen, und dass die Verschiebung des inneren Rohres im äußeren Rohr mittels einer Einstelleinrichtung einstellbar ist. Die Aufgabe kann auch in einer alternativen Version mit Meißelscharen in ähnlicher Form gelöst werden, wobei diese Lösung im Anspruch 2 angegeben ist.

Besonders bevorzugt ist vorgesehen, dass die Bodenbearbeitungseinrichtung eine Sämaschine und die Scheibenschare Scheibensäschare oder die Meißelschare, Meißelsäschare sind.

Bei Sämaschinen ist die Erfindung besonders effektiv und zweckgerichtet einsetzbar, kann jedoch grundsätzlich auch bei anderen Bodenbearbeitungsmaschinen vorgesehen werden.

Die erfindungsgemäße Sämaschine ist mit einer Vorrichtung ausgerüstet, die zwei ineinander verschiebbare Profilrohre aufweist. Mit dieser erfindungsgemäßen Konzeption lässt sich diese Aufgabe auf besonders einfache und praktikable Weise lösen. Eine Konzeption mit zwei ineinander verschiebbaren Profilrohren ist unkompliziert und kann auch von technisch nicht speziell ausgebildeten Benutzern nachvollzogen und leicht betätigt werden.

An dem äußeren Profilrohr sind die Scheibenschare oder bei einer anderen Ausführungsform die Meißelschare mittelbar oder unmittelbar mittels einer festen Verbindung angebracht.

Das innere Rohr der beiden zueinander verschiebbaren Profilrohre trägt dagegen ein oder mehrere Stützräder. Diese Stützräder laufen auf dem zu bearbeitendem Boden ab und begrenzen auf diese Weise die Arbeitstiefe der Scheibenschare und geben somit die Saattiefe vor.

Das obere Ende des inneren verschiebbaren Rohrs endet im äußeren Rohr.

Bevorzugt ist zwischen dem oberen Ende des inneren Rohrs und dem oberen Ende des äußeren Rohrs eine Federeinrichtung eingesetzt, besonders bevorzugt eine Spiralfeder. Dies Federeinrichtung stützt sich an einer Einrichtung im Bereich des oberen Endes des äußeren Rohres ab und wirkt auf diese Weise einer Aufwärtsbewegung des inneren Rohres innerhalb des äußeren Rohres entgegen.

An dem oberen Ende des inneren Rohres ist eine Verlängerungseinrichtung angebracht. Diese bildet gewissermaßen eine Fortsetzung des inneren Rohres durch die Federeinrichtung und das obere Ende des äußeren Rohres hindurch. Diese Verlängerungseinrichtung ragt also aus dem äußeren Rohr oben heraus. An dieser Verlängerungseinrichtung kann eine aufwärtsgerichtete Zugkraft angreifen. Diese Zugkraft wirkt somit gegen die Federkraft der Federeinrichtung.

Auf diese Weise kann eine Aufwärtsbewegung des inneren Rohres und des am inneren Rohr befestigten Stützrades gegen die Rückstellkraft der Federeinrichtung erfolgen.

Die gesamte Vorrichtung mit dem äußeren Rohr und dem darin liegenden und zum äußeren Rohr verschiebbaren inneren Rohr und mit den Stützrollen und den Scheibenscharen ist insgesamt an einer quer zur Arbeitsrichtung der Sämaschine angebrachten Welle befestigt. Zwischen der Welle und dem äußeren Rohr ist eine weitere Federeinrichtung, bevorzugt eine Blattfeder, so angebracht, dass eine Drehung dieser Welle um ihre Längsachse eine Änderung des Bodendrucks der Scheibenschare bewirkt.

Diese Änderung des Bodendrucks der Scheibenschare allein führt jedoch noch nicht zu einer Änderung der Arbeitstiefe der Scheibenschare. Erst dann, wenn auch gleichzeitig eine Verschiebung der beiden Rohre zueinander vorgenommen wird, ändern sich die Positionen der Zentren des Stützrades und der Scheibenschare relativ zueinander. Erst diese Verschiebung führt dann auch zu einer Änderung der Saattiefe.

Dadurch lassen sich verschiedene Vorteile erzielen. So kann der Bodendruck der Scheibenschare während des Sävorgangs erhöht werden, ohne dass dies auch Einfluss auf die Arbeitstiefe der Scheibenschare nimmt und damit die Saattiefe beeinflusst.

Dies ist wichtig, um die Saattiefe unabhängig von der Festigkeit des Bodens einstellen zu können. Würde der Bodendruck auch schon die Arbeitstiefe der Scheibenschare festlegen oder jedenfalls beeinflussen, so würde ein besonders fester und daher einen hohen Bodendruck für die Scheibenschare zu ihrem Eindringen benötigen, so würde dadurch in unerwünschter Form auch die Saattiefe vergrößert werden. Mit der Erfindung kann dies vermieden werden.

Durch das bevorzugte Vorsehen einer gemeinsamen Welle lässt sich der Bodendruck der Scheibenschare zentral einstellen. Bevorzugt wird jetzt zusätzlich diese Welle auch vertikal verschiebbar. Hierzu kann eine geeignete Einstellmöglichkeit vorgesehen werden. Dadurch kann ein auf die äußeren Rohre der zueinander verschiebbaren Rohrpaare über die zweite Federeinrichtung mit den Blattfedern wirkendes Moment zur Erhöhung oder zur Senkung des Bodendrucks in seine vertikale und seine horizontale Vektorkomponente zerlegt werden. Das Moment kann damit zusätzlich genutzt werden.

Durch eine solche vertikale Verschiebung der gemeinsamen Welle wird gleichzeitig auch der Anstellwinkel der äußeren Rohre zur Bodenoberfläche geändert.

Die Änderung dieses Winkels führt zu einer Zunahme beziehungsweise zu einer Abnahme der für eine vertikale Lageverschiebung der Scheibenschare notwendigen Verschiebung des inneren Rohres relativ zum äußeren Rohr. Diese Winkeländerung kann somit als zusätzliche Einstellmöglichkeit genutzt werden.

Die Saattiefe kann ebenfalls zentral eingestellt werden. Hierzu ist es bevorzugt vorgesehen, die Krafteinwirkung auf die oberen Verlängerungseinrichtungen der inneren Rohre zentral von einer quer zur Arbeitsrichtung der Sämaschine angeordneten Welle aus vorzunehmen. Diese zweite Welle ist bevorzugt parallel zur ersten Welle angeordnet. Diese zweite Welle übt die erwähnte Zugkraft auf die Verlängerungseinrichtungen mehrerer oder aller inneren Rohre parallel und gleichzeitig zueinander aus. Diese Krafteinwirkung kann beispielsweise über Zugseile, hydraulische Arbeitszylinder oder andere maschinelle Einrichtungen bewirkt werden.

Die Gegenkraft für das Verschieben des inneren Rohres wird von der bereits erwähnten ersten Federeinrichtung vorgenommen.

Die zentrale Einstellbarkeit aller inneren Rohre zu allen äußeren Rohren gleichzeitig für mehrere Scheibenschare bietet den zusätzlichen Vorteil, dass die Anlenkpunkte für die Verstellung der Saattiefe sich nicht in dem direkten Einwirkungsbereich der bewegten Erde, von hochgeschleuderten Steinen oder anderen Elementen befindet, sondern vergleichsweise deutlich oberhalb der Bodenoberfläche angeordnet ist.

Von Vorteil ist es auch, dass die Gegenkraft zu dem Vektor der Vorfahrtgeschwindigkeit eine automatische Unterstützung der Rückstellkraft der ersten Federeinrichtung mit den bevorzugten Spiralfedern zwischen den oberen Enden des Innenrohres und des Außenrohres gewährt. Dadurch kann eine zügige Korrektur der Saattiefe sowohl in Richtung zu einer Vertiefung als auch in einer Richtung zur Verringerung der Saattiefe während der Vorfahrt erfolgen.

Dabei wird eine flachere Saattiefe durch eben diese Gegenkraft automatisch bewirkt, während eine tiefere Aussaat durch den anliegenden Druck der zweiten Federeinrichtung mit den Blattfedern auf das äußere Rohr unterstützt wird.

Da sowohl der Bodendruck der Vorrichtungen als auch die Einstellung der Saattiefe jeweils über Wellen möglich ist, welche quer zur Arbeitsrichtung der Sämaschine und somit parallel zueinander angeordnet sind, bietet sich eine weitere Möglichkeit. Mittels einer geeigneten Verbindungseinrichtung können die beiden Wellen so miteinander gekoppelt werden, dass zeitgleich der Bodendruck und die Saattiefe eingestellt werden. Dies ist in einigen Fällen erwünscht.

Eine einfache Unterbrechung dieser Verbindungseinrichtung kann dann die Option der gleichzeitigen Einstellbarkeit der Parameter Bodendruck und Saattiefe außer Kraft setzen, falls dies bei anderen Anwendungsfällen gerade nicht gewünscht ist.

Besonders bevorzugt wird jedes Außenrohr mit zwei Scheibenscharen und zwei Stützrollen ausgestattet. Dies halbiert die erforderliche Anzahl der tragenden äußeren Rohre und der Blattfedern.

Dies hat eine konstruktive Vereinfachung der Maschine zur Folge und darüber hinaus auch eine Gewichtsersparnis und Kostenreduzierung. Trotzdem kann gleichzeitig ein aus Sicht des Pflanzenbaus im Allgemeinen besonders bevorzugter Reihenabstand der Scheibenschare von 125 mm eingehalten werden.

Dies ist in einer weiteren Ausführungsform noch besser ermöglicht. Dabei ist vorgesehen, dass die Scheibenscharen und die Stützräder zueinander versetzt jeweils paarweise an einer Kombination aus einem äußeren Rohr und einem inneren Rohr angebracht sind. Durch die versetzte oder auch Offset-Anordnung kann der Reihenabstand problemlos eingehalten werden und es wird sicher vermieden, dass Erdklumpen oder Stroh zu einer Verstopfung der Durchgänge zwischen den Säscheiben führen.

Eine solche versetzte Anordnung kann insbesondere dadurch geschaffen werden, dass die an einer Kombination aus einem äußeren Rohr und einem inneren Rohr angebrachten beiden Scheibenschare in Vorfahrtrichtung gesehen zueinander versetzt sind, dass die den beiden versetzt zueinander angeordneten Scheibenscharen zugeordneten Stützräder ebenfalls und um den gleichen Abstand zueinander versetzt sind, und dass eine Umlenkeinrichtung vorgesehen ist, welche eine zueinander synchrone Auf- oder Abwärtsbewegung der beiden Stützräder relativ zu den zugeordneten Scheibenscharen bewirkt wird.

Auf diese Weise wird erreicht, dass die mittels der Längenänderung der Kombination aus innerem Rohr und äußerem Rohr hervorgerufenen Kräfte auf beide Scheibenscharen gleichmäßig wirkt, obwohl diese einen unterschiedlichen Abstand von den beiden Rohren besitzen. Auch die beiden Stützräder können auf diese Weise synchron zueinander arbeiten.

Weitere bevorzugte Merkmale sind in den Unteransprüchen angegeben.

Im Folgenden werden anhand der Zeichnung mehrere Ausführungsbeispiele der Erfindung näher beschrieben. Es zeigen:
- **Figur 1**: eine schematische Seitenansicht mit einer Darstellung der wesentlichen Teile einer ersten Ausführungsform der Erfindung;
- **Figur 2**: eine schematische Seitenansicht mit einer Darstellung einer leicht modifizierten Ausführungsform der Erfindung aus Figur 1;
- **Figur 3**: eine Draufsicht auf die Ausführungsform aus Figur 2;
- **Figur 4**: eine perspektivische Ansicht der Ausführungsform aus den Figuren 2 und 3, gesehen schräg von hinten;
- **Figur 5**: eine Draufsicht auf den entsprechenden Bereich einer Sämaschine mit einer Vielzahl von Elementen aus der Figur 3;
- **Figur 6**: eine Sicht auf die Anordnung aus der Figur 5, gesehen entgegen der Vorfahrtrichtung;
- **Figur 7**: eine perspektivische Ansicht auf eine andere Ausführungsform mit zueinander in Vorfahrtrichtung abwechselnd versetzten Scheibenscharen;
- **Figur 8**: eine schematische Darstellung eines Details der Anordnung aus Figur 7, gesehen von der Seite;
- **Figur 9**: die Ansicht aus Figur 8, ohne durchscheinende Linien;
- **Figur 10**: ein Detail herausgezeichnet aus Figur 8 und 9; und
- **Figur 11**: ein weiteres Detail herausgezeichnet aus den Figuren 8 und 9.

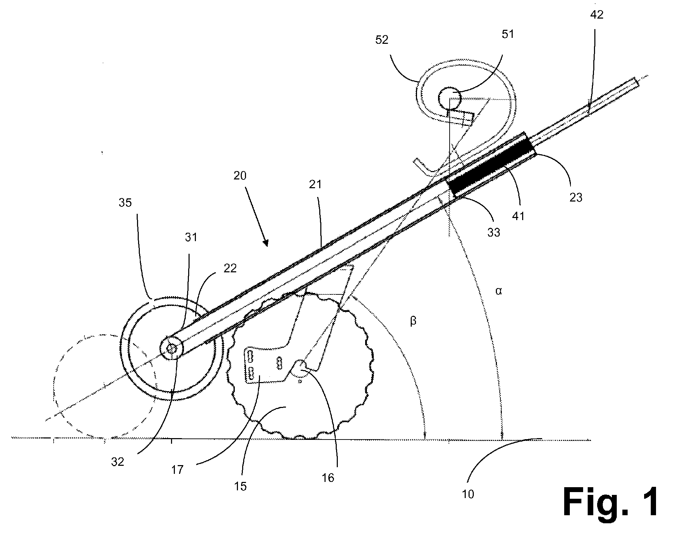

In der **Figur 1** ist ein bestimmter Bereich einer Sämaschine dargestellt. Horizontal sieht man die Bodenoberfläche 10, auf der die im Übrigen nicht dargestellte Sämaschine sich bewegt, und zwar in der Arbeitsrichtung von links nach rechts in der dargestellten Bildebene. Dies ist zugleich die Vorfahrtrichtung.

Die Sämaschine besitzt Säorgane, hier Scheibenschare 15, die auch als Scheibensäschare oder Scharscheiben bezeichnet werden. Es handelt sich um speziell geformte drehbare Scheiben, die in den Boden unterhalb der Bodenoberfläche 10 eingreifen, was in der Figur 1 noch nicht dargestellt ist. Die Scheibenschare 15 drehen sich um eine horizontal verlaufende und senkrecht zur Bildebene und damit auch zur Vorfahrtsrichtung verlaufende Drehachse 16 und sind in Aufnahmeeinrichtungen 17 gelagert.

Diese Aufnahmeeinrichtungen 17 sind fest an einer Vorrichtung 20 befestigt, die ein äußeres Rohr 21 mit einem unteren Ende 22 und einem oberen Ende 23 sowie ein innerhalb des äußeren Rohres 21 verschiebbares inneres Rohr 31 mit einem unteren Ende 32 und einem oberen Ende 33 aufweist.

Der Querschnitt des inneren Rohres 31 und des äußeren Rohres 21 ist so gewählt, dass die beiden Rohre zwar ineinander parallel zu ihren Achsen verschoben werden können, und zwar vorzugsweise möglichst leicht laufend, dass eine Verdrehung um die gemeinsame Achse jedoch möglichst vermieden wird.

Es können also beides beispielsweise Quadratrohre oder speziell geformte Profilrohre sein, beispielsweise mit einem Kreisquerschnitt und ineinander gepassten nasenartigen Vorsprüngen beziehungsweise Einschnitten.

Die Vorrichtung 20 mit dem äußeren Rohr 21 und dem inneren Rohr 31 schließt mit der Bodenoberfläche 10 einen Winkel α in einer Größenordnung um etwa 30° ein. Sie verläuft also schräg ansteigend von der Bodenoberfläche nach oben. Im Übrigen verlaufen sowohl dass innere Rohr 31 als auch das äußere Rohr 21 in der Bildebene und damit abgesehen von dem Winkel in vertikaler Hinsicht parallel zur Vorfahrtrichtung und Arbeitsrichtung der Sämaschine.

Die Aufnahmeeinrichtung 17 kann eine oder auf zwei Seiten auch zwei im Wesentlichen parallel zueinander laufende Scheibenschare 15 tragen. Sie ist an dem äußeren Rohr 21 befestigt.

Bevorzugt ist es, wenn die beiden im Wesentlichen parallel zueinander laufenden Scheibenschare 15 nicht exakt parallel stehen, sondern in einer Position von -x° beziehungsweise von +x° zur Vorfahrtrichtung, also zur Arbeitsrichtung der Sämaschinen angeordnet sind. Die Größenordnung der beiden Winkel -x° und +x° liegt etwa bei -3° oder +3° mit Abweichungen von etwa 0,5°. Diese Winkel werden in der Horizontalen gemessen. Die beiden Drehachsen 16 fallen in diesem Fall nicht zusammen, sondern schließen miteinander einen Winkel in der Horizontalen ein. Diese Anordnung mit zwei entgegengesetzten, aber zur Vorfahrtrichtung gleichgroßen Anstellwinkeln bewirkt eine Aufhebung der sonst auftretenden seitwärts wirkenden Kraftvektoren an dem äußeren Rohr 21.

Das innere Rohr 31 trägt an seinem unteren Ende 32 ein oder mehrere Stützräder 35 oder Stützrollen. Dieses oder diese Stützräder 35 werden durch eine Relativverschiebung der beiden zueinander verschiebbaren Rohre 21 und 31 relativ zum äußeren Rohr 31 ausgefahren beziehungsweise eingefahren. Dies ist in der Figur 1 im durchgezogenen Zustand (eingefahren) und im ausgezogenen Zustand (ausgefahren) in gestrichelter Linie dargestellt.

Durch die Verschiebung relativ zum äußeren Rohr 21 wird dadurch auch die Relativposition des oder der Stützräder 35 zu der oder den Scheibenscharen 15 verändert, und zwar sowohl in Richtung eines vergrößerten oder verkleinerten horizontalen Abstandes als auch in Richtung eines vergrößerten oder verkleinerten vertikalen Abstandes.

Bei einer praktischen Ausführungsform sind das äußere Rohr 21 und das innere Rohr 31 um etwa 20 bis 25 cm relativ zueinander verschiebbar. Dies entspricht bei einem Winkel von 30° zwischen der Bodenoberfläche 10 und den beiden Rohren 21, 31 einer horizontalen Verschiebung in einer Größenordnung zwischen etwa 17 und 20 cm. Bei Sämaschinen für andere Anforderungen oder bestimmte Bodenverhältnisse kann durch eine andere Wahl des Winkels abweichend von 30° und einer andere Größenordnung der Verschiebbarkeit der beiden Rohre 21, 31 relativ zueinander auch eine andere Möglichkeit der maximalen Arbeitstiefe für die Scheibenschare 15 erzielt werden.

Die Stützräder 35 laufen auf der Bodenoberfläche 10. Ihre vertikale Höhe oberhalb der Scheibenschare 15 gibt damit zugleich die maximale Arbeitstiefe der Scheibenschare 15 vor, die zugleich die Saattiefe bildet.

Das innere Rohr 31 und das äußere Rohr 21 sind jeweils ungefähr gleichlang. Das bedeutet, dass das untere Ende 22 und das obere Ende 23 des äußeren Rohres 21 voneinander ungefähr genauso weit entfernt sind, wie das untere Ende 32 und das obere Ende 33 des inneren Rohres 31.

Dabei ist vorgesehen, dass das obere Ende 23 des äußeren Rohres 21 weitgehend verschlossen ist, jedoch noch eine zentrale Öffnung besitzt, die noch im Folgenden erörtert wird. Zwischen dem oberen Ende 33 des inneren Rohres 31 und dem oberen, wie beschrieben weitgehend verschlossenen oberen Endes 23 des äußeren Rohres 21 ist eine Federeinrichtung 41 vorgesehen, insbesondere eine Spiralfeder. Diese Federeinrichtung 41 ist so angeordnet, dass sie einer Aufwärtsbewegung des inneren Rohres 31 innerhalb des äußeren Rohrs 21 entgegenwirkt. Diese Federeinrichtung 41, also beispielsweise die Spiralfeder, stützt sich mit ihrem oberen Ende an dem verschlossenen Bereich des oberen Endes 23 des äußeren Rohrs 21 ab.

An dem inneren Rohr 31 ist an seinem oberen Ende 33 nicht nur diese Federeinrichtung 41 abgestützt, sondern dieses innere Rohr 31 setzt sich aufwärts in Form einer Verlängerungseinrichtung 42 fort. Diese Verlängerungseinrichtung 42 ragt durch die Federeinrichtung 41, beispielsweise zentral durch die Spiralfeder hindurch und ragt auch durch die zentrale Öffnung in dem verschlossenen oberen Ende 23 des äußeren Rohres 21 heraus. Diese Verlängerungseinrichtung 42 kann einstückig mit dem inneren Rohr 31 hergestellt sein, beispielsweise eine Fortsetzung des Profilrohres, jedoch mit geringerem Durchmesser sein.

Eine aufwärts gerichtete Zugkraft, die an dieser Verlängerungseinrichtung 42 des inneren Rohres 21 angreift, wirkt somit gegen die Federkraft der Federeinrichtung 41 und bewirkt auf diese Weise eine Aufwärtsbewegung des inneren Rohres 31 innerhalb des äußeren Rohres 21 und damit zugleich eine Aufwärtsbewegung des Stützrades 35 gegen die Rückstellkraft der Federeinrichtung 41.

Mit der in Figur 1 dargestellten Ausführungsform lässt sich neben der Einstellung der maximalen Arbeitstiefe auch eine Änderung des Bodendrucks der Scheibenschare erzielen, und zwar auch eine konstruktiv besonders einfache und in Zusammenhang mit der Einstellung der maximalen Arbeitstiefe für den Benutzer praktikable und gut nachvollziehbare Weise.

Hierzu ist das äußere Rohr 21 mit dem darin liegenden inneren Rohr 31 sowie dem Stützrad 35 und den Scheibenscharen 15 an einer quer zur Vorfahrtrichtung und Arbeitsrichtung der Sämaschine und somit senkrecht zur Bildebene angebrachten Welle 51 befestigt. Zwischen dieser Welle 51 und dem äußeren Rohr 21 ist eine zweite Federeinrichtung 52 angeordnet, und zwar hier bevorzugt in Form einer Blattfeder. Eine Drehung der Welle 51 um ihre Längsachse bewirkt somit auf einfache Weise durch die Vermittlung der zweiten Federeinrichtung 52 eine Änderung des Bodendrucks der Scheibenschare 15.

Diese Änderung des anliegenden Drucks auf die Vorrichtung 20 und damit des Bodendrucks der Scheibenschare 15 bewirkt jedoch keine Änderung der Arbeitstiefe der Scheibenschare 15, wenn nicht auch gleichzeitig eine Verschiebung des inneren Rohrs 31 relativ zum äußeren Rohr 21 vorgenommen wird. Erst eine solche Verschiebung der beiden Rohre 21, 31 zueinander bewirkt eine relative Lageverschiebung der Zentren von Stützrad 35 und Scheibenschare 15 und damit eine Änderung der Sätiefe.

In der Figur 1 nicht dargestellt ist, dass jetzt weitere Vorrichtungen 20 mit äußeren Rohren 21 und inneren Rohren 31 parallel zu der dargestellten Komponente vorgesehen werden können, die Ihrerseits mit Stützrädern 35 und Scheibenscharen 15 ausgerüstet sind, jedoch über die gleiche Welle 51 betätigt werden können. Auch die Verlängerungseinrichtungen 42 können (in dieser Figur 1 noch nicht dargestellt) durch eine senkrecht zur Bildebene der Figur 1 mit einer zweiten Welle verbunden werden, die parallel zur ersten Welle 51 stehen sollte. Mit dieser zweiten Welle könnte dann die Zugkraft auf die Verlängerungse inrichtungen 42 gleichzeitig auf alle Verlängerungseinrichtungen 42 ausgeübt werden, sodass gleichzeitig die inneren Rohre 31 relativ zu den äußeren Rohren 21 parallel bewegt werden.

Aus der Darstellung in der Figur 1 ergibt sich darüber hinaus, dass sich durch einen Hebemechanismus für die Welle 51, der eine vertikale Verschiebung dieser Welle 51 über eine geeignete Einstellmöglichkeit vornehmen könnte, der Winkel von 30°, den die inneren und äußeren Rohre 21 , 31 mit der Bodenoberfläche 10 einschließen, ändern lässt. Der Anstellwinkel der äußeren Rohre 21 zur Bodenoberfläche 10 würde sich dadurch also ändern. Dadurch kann das über die zweite Federeinrichtung 52 auf die äußeren Rohre 21 wirkende Moment zur Erhöhung und Senkung des Bodendrucks in seine vertikale und horizontale Vektorkomponente zerlegt und zusätzlich genutzt werden.

Die erste Welle 51 ist in einer Größenordnung von etwa 1 m oberhalb der Bodenoberfläche 10 angeordnet. Der Abstand in horizontaler Richtung in Vorfahrtrichtung zwischen der Welle 51 und einem vollständig ausgefahrenem Stützrad 35 am Ende des inneren Rohres 31 liegt ebenfalls in einer Größenordnung von 1 m oder etwa darüber. Eine Verbindungslinie etwa von der Drehachse 16 zur ersten Welle 51, die ja ebenfalls ungefähr parallel verlaufen, schließt mit der Bodenoberfläche 10 einen Winkel β in einer Größenordnung um etwa 55° ein.

Bei derartigen Größenordnungen kann einerseits sichergestellt werden, dass die Bedienbarkeit für den Benutzer besonders einfach ist, da er an alle Elemente gut herankommt, und andererseits die Welle 51 und die mit ihr verbundenen Aggregate sich bereits in einer Höhe über dem Erdboden befinden, in der die Verschmutzungsgefahr bereits deutlich reduziert ist.

Diese Winkeländerung bewirkt dann auch eine Zunahme beziehungsweise Abnahme der für eine vertikale Lageverschiebung der Scheibenschare 15 notwendigen Verschiebung des inneren Rohrs 31 innerhalb des äußeren Rohrs 21 und kann auf diese Weise als zusätzliche Einstellmöglichkeit genutzt werden.

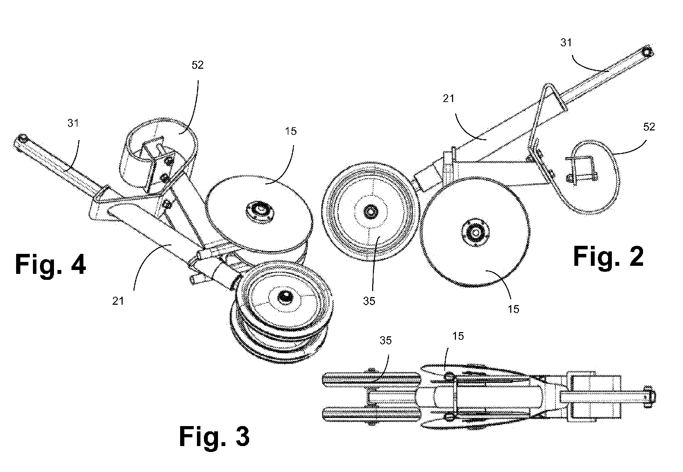

In der **Figur 2** sieht man eine verglichen mit der Figur 1 leicht modifizierte Ausführungsform, ebenfalls gesehen von der Seite. Das Innenleben der Rohre 21 und 31 ist hier weggelassen, um den Aufbau so zu zeigen, wie er sich dem Betrachter von außen darbietet. Bei dieser Ausführungsform ist darüber hinaus eine andere Anordnung der Federeinrichtungen 41 und 52 vorgesehen, die weniger hoch aufbaut.

In der **Figur 3** sieht man die Vorrichtung 20 von oben gesehen. Die leichte Schrägstellung der Scheibenschare 15 mit ihrer Drehachse 16 ist gut zu erkennen, ebenso die paarweise Anordnung der Stützräder 35.

Das Anbringen von je zwei Säscharen an jeder Vorrichtung 20 führt zu einer deutlichen Platzersparnis. Auch das Gewicht der Gesamtkonstruktion lässt sich auf diese Weise reduzieren. Schließlich werden auch weniger Federeinrichtungen 41 und 52 benötigt. Die beiden Säscharen können hier parallel durch die Längenänderung der Rohrkombination 21, 31 beaufschlagt werden.

In der **Figur 4** sieht man perspektivisch die Vorrichtung 20 mit Scheibenschar 15, Stützrädern 35, innerem Rohr 31 und äußerem Rohr 21 sowie der zweiten Federeinrichtung 52, und zwar gesehen schräg von oben aus der unter Berücksichtigung der Vorfahrtrichtung hinteren Seite.

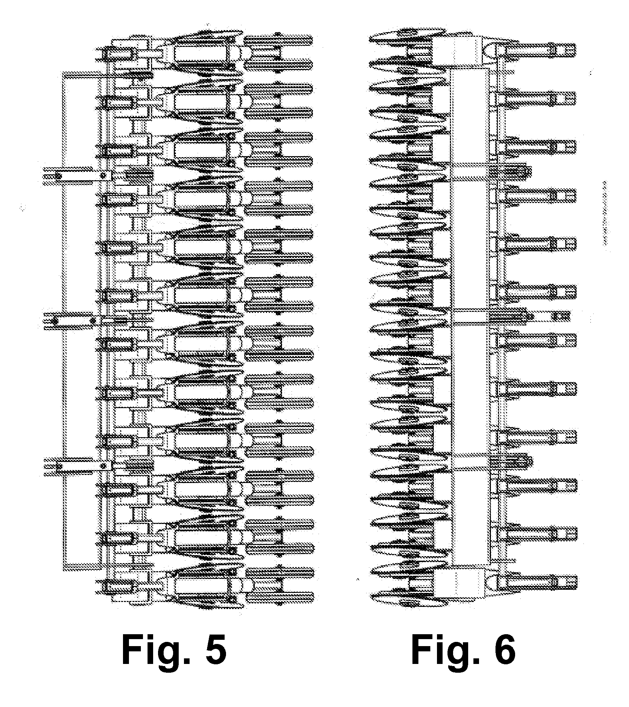

Eine Sämaschine weist üblicherweise nicht nur ein oder zwei Scheibenschare 15 auf, sondern eine große Vielzahl davon, die auch jeweils mit Stützrädern 35 auszurüsten sind. In der **Figur 5** sieht man nun eine Draufsicht auf eine derartige erfindungsgemäß ausgestattete Sämaschine, in der 24 Scheibenschare mit 24 Stützrädern an 12 Vorrichtungen 20 mit jeweils einem äußeren Rohr 21 und einem inneren Rohr 31 angebracht sind. Man sieht, dass um eine gemeinsame Welle 51 eine entsprechende Anzahl an zweiten Federeinrichtungen 52 den gewünschten Druck auf die Kombination aus Scheibenscharen 15 und Stützrädern 35 ausübt.

In der **Figur 6** sieht man nun eine entsprechende Ansicht der Anordnung aus der Figur 5 in Fahrtrichtung gesehen.

Bei einer derartigen Ausführungsform ist die Anordnung der Vielzahl an Scheibenscharen relativ gedrängt.

In einer weiteren, besonders bevorzugten Ausführungsform der Erfindung ist diese Anordnung modifiziert und das Konzept noch verbessert worden. Es wird jetzt eine abwechselnd versetzte Anordnung der Scheibenscharen vorgesehen. Es gibt also eine erste Gruppe an Scheibenscharen, die nebeneinander stehen und deren Stützräder ebenfalls jeweils nebeneinander angeordnet sind, wobei die Drehachsen der Stützräder alle ungefähr auf einer Linie liegen.

Eine zweite Gruppe von Scheibenscharen liegt ihrerseits nebeneinander, wobei die Stützräder dieser Gruppe von Scheibenscharen ebenfalls Drehachsen besitzen, die auf einer Linie liegen.

Die Scheibenscharen 15 sind auch bei dieser Ausführungsform jeweils paarweise an einer Vorrichtung 20 mit einem inneren Rohr 31 und einem äußeren Rohr 21 angeordnet. Dabei ist ein Scheibenschar eines Paares der vorderen und das andere der hinteren Gruppe zugeordnet.

Durch diese abwechselnde Anordnung wird erreicht, dass zwischen den Scheibenscharen 15 keine Verstopfungen hervorgerufen etwa durch Erde oder Stroh oder vergleichbare Fremdkörper hervorgerufen werden kann. Da der seitliche Abstand zwischen den Scheibenscharen nun größer ist, als in der Ausführungsform aus den Figuren 5 und 6, können die Scheibenscharen hier die auch von ihnen aufgeworfenen Erdkrumen leichter zur Seite schieben, wobei dann durch die dahinter laufenden und genau in der Lücke sich befindenden Scheibenscharen der zweiten Gruppe dieser Bereich bearbeitet wird.

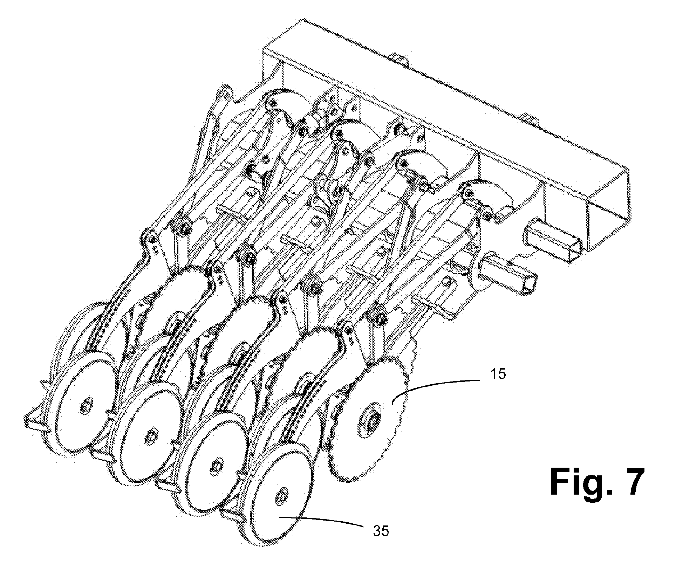

Eine entsprechende Anordnung kann man in der **Figur 7** erkennen. Diese zeigt perspektivisch eine solche versetzte Anordnung.

Der Aufbau, wie er in der Figur 7 gezeigt ist, ermöglicht es problemlos, Zwischenabstände zwischen den Säscheiben von 125 mm zu erzielen, die dann entsprechend Reihenabstände der von den Säscheiben gezogenen Reihen hervorruft.

Der dargestellte Versatz der Säscheiben zueinander kann als sogenannte Offset-Anordnung bezeichnet werden. Hätte man nun durch den Versatz durch die verschieden langen Hebelwege eine direkte Übertragung der durch die Längenänderung der Rohrkombination 21, 31 erzeugten Kräfte versucht, so hätte dieses unterschiedliche Andruckkräfte für die Scheibenschare auf dem Boden zur Folge gehabt.

Hierfür ist nun eine geschickte Umlenkung der Kräfte in einer bevorzugten Ausführungsform vorgesehen, die in den folgenden Figuren näher erläutert wird.

Um nun eine besonders effektive Umsetzung des Konzeptes aus den inneren Rohren 31 und den äußeren Rohren 21 zu schaffen, wird mit Vorteil der Umstand genutzt, dass jeweils eine Scheibenschar der vorderen Gruppe und eine Scheibenschar der hinteren Gruppe zusammen mit den weiteren Elementen eine Anordnung aus zwei Scheibenscharen bilden, die sich in der Sämaschine vielfach wiederholt und die auch relativ miteinander gleichartige Bewegungen ausüben.

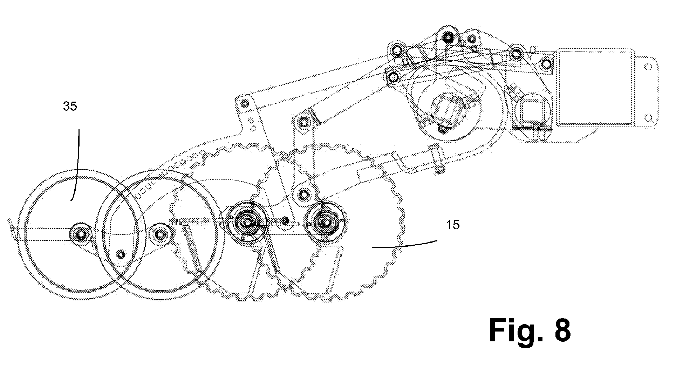

Von daher ist am unteren Ende 32 des inneren Rohrs 31 eine zusätzliche Umlenkeinrichtung 60 angeordnet worden, die in der **Figur 8** näher veranschaulicht ist.

Die Figur 8 zeigt eine Anordnung aus den zwei Scheibenscharen mit den zwei Stützrädern von der Seite gesehen, wobei die sich gegenseitig verdeckenden Bauteile durchscheinend gezeichnet sind, um den Aufbau zu verdeutlichen.

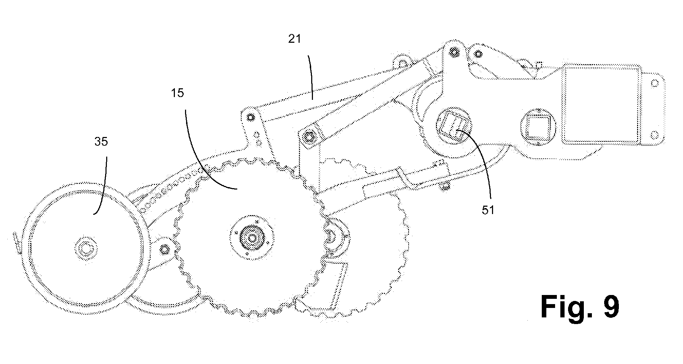

In der **Figur 9** sieht man diese Darstellung jetzt ohne die durchscheinenden Linien, ebenfalls von der Seite gesehen.

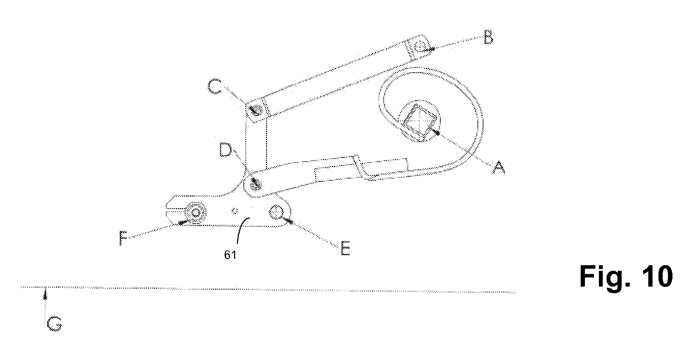

In der **Figur 10** ist die Umlenkung der Kräfte und die dazu eingesetzte Einrichtung nochmals deutlicher herausgezeichnet, hier unter Weglassung der Scheibenschar 15 und des Stutzrades 35.

In der Figur 10 sind die Aufhängungselemente der Einrichtung 60 näher dargestellt.

Die zweite Federeinrichtung 52 besitzt einen Drehpunkt A, der der Welle 51 aus der Ausführungsform in Figur 1 entspricht, wie man auch in der Figur 9 erkennen kann. Die Welle 51 ist am Fahrgestellrahmen der Sämaschine drehbar gelagert. Dadurch führt eine Drehung der Welle zu einer entsprechenden Spannung beziehungsweise Entspannung der zweiten Federeinrichtung 52, die um den Drehpunkt A gedreht wird.

An dem Fahrzeugrahmen ist an einem Punkt B eine Stange angelenkt, die ihrerseits an einem Punkt C drehbar mit einem Aufhängungselement 61 verbunden ist.

An dem Aufhängungselement 61 ist ebenfalls drehbar an einem Punkt D eine Verlängerung der äußersten Spirale der Spiralfeder der zweiten Federeinrichtung 52 angeschlossen.

Die Punkte A, B, C und D bilden dabei nahezu ein Parallelogramm.

Beabstandet von den beiden Drehpunkten C und D befinden sich an dem Aufhängungselement 61 darüber hinaus zwei Punkte E und F. Die Punkte E und F sind die Achspunkte, also die Aufhängungspunkte beziehungsweise die Drehachsen 16 von zwei Säscheiben 15 (diese sind weggelassen), die vor beziehungsweise hinter der Zeichenebene auf der Ebene G, also der Bodenoberfläche 10 aus der Figur 1, ablaufen.

Das Parallelogramm aus den Punkten A, B, C und D wird über den Drehpunkt A der zweiten Federeinrichtung 52 in Richtung zur Bodenoberfläche 10 in Form der Ebene G gepresst. Ein Heben oder Senken des Parallelogramms A, B, C, D hat aufgrund der Parallelogrammform stets zur Folge, dass sich die gedachte horizontale Ebene durch F und E immer parallel zur Ebene G bewegt.

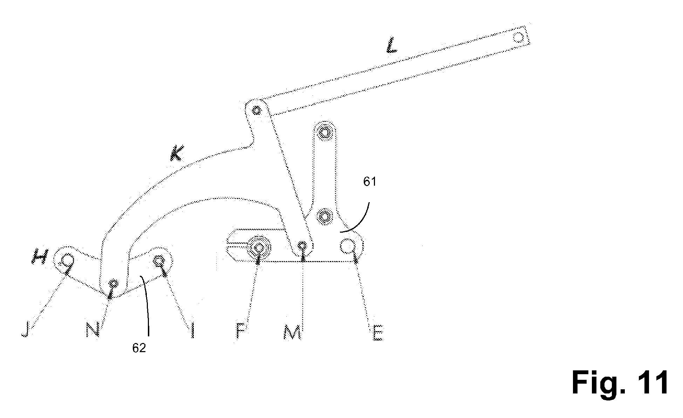

In der **Figur 11** sind einige Elemente aus der Figur 10 wiederzufinden. Darüber hinaus sind hier die Verstellelemente herausgezeichnet.

Hierzu gehört in vereinfachter Form die Anordnung aus dem äußeren Rohr 21 und dem inneren Rohr 31, die hier gemeinsam vereinfacht dargestellt sind. Zu erkennen ist lediglich der längenveränderliche Zylinderkolben L, der in etwa dem äußeren Rohr 21 aus der Vorrichtung 20 entspricht. An seinem unteren Ende 22 ist ein zusätzliches Hebelelement K eingefügt. Das Hebelelement K stützt sich in Fahrtrichtung hinten im Punkt M auf dem die beiden Säscheiben 15 tragenden Aufhängungselement 61 mit den Punkten E und F ab.

Im hinteren Teil (gesehen in Vorfahrtrichtung) wirkt das Hebelelement K auf ein weiteres Teil, nämlich ein die beiden Stützrollen 35 tragendes Stützrollenteil 62 im Drehpunkt N.

Die Stützrolle beziehungsweise das Stützrad 35 mit dem Drehpunkt I ist dabei der Säscheibe 15 mit dem Drehpunkt E zugeordnet und analog ist die Stützrolle mit dem Drehpunkt J der Säschare mit dem Drehpunkt F zugeordnet. Der Abstand von I zu E und der Abstand von F zu J sind jeweils identisch.

Eine Längenänderung des Elements L, also eine Verschiebung des inneren Rohrs 31 relativ zum äußeren Rohr 21, bewirkt also stets eine Aufwärts- oder eine Abwärtsbewegung der Stützrollen 35 entsprechend den Lagerpunkten I und J relativ zu den Scheibenscharen 15.

Abgesehen von der Umlenkung der durch die Längenänderung der Rohrkombination 21, 31 hervorgerufenen Kräfte mit den Elementen 60, 61, K und 62 ist daher die Funktionsweise der Ausführungsform aus der Figur 1 und der aus den Figuren 7 bis 11 identisch.

### Bezugszeichenliste

- 10: Bodenoberfläche
- 15: Scheibenschar
- 16: Drehachse
- 17: Aufnahmeeinrichtung

- 20: Vorrichtung
- 21: äußeres Rohr
- 22: unteres Ende des äußeren Rohrs
- 23: oberes Ende des äußeren Rohrs

- 31: inneres Rohr
- 32: unteres Ende des inneren Rohrs
- 33: oberes Ende des inneren Rohrs
- 35: Stützräder

- 41: erste Federeinrichtung
- 42: Verlängerungseinrichtung

- 51: Welle
- 52: zweite Federeinrichtung

- 60: Umlenkeinrichtung
- 61: Aufhängungselement
- 62: Stützrollenteil

- A: Drehpunkt der zweiten Federeinrichtung 52
- B: Anlenkungspunkt am Fahrzeugrahmen
- C: Anlenkungspunkt am Aufhängungselement 61
- D: Anlenkungspunkt am Aufhängungslement 61
- E: Drehachse 16 der vorderen Scheibenschar 15
- F: Drehachse 16 der hinteren Scheibenschar 15
- G: Bodenoberfläche 10
- H: Stützrollenteil 62
- I: Drehachse des vorderen Stützrades 35
- J: Drehachse des hinteren Stützrades 35
- K: Hebelelement
- L: längenveränderliche Rohrkombination 21, 31
- M: Anlenkpunkt des Hebelelements K am Aufhängelement 61
- N: Anlenkungspunkt des Hebelelements K am Stützrollenteil 62

## Patentansprüche

1. Bodenbearbeitungseinrichtung mit Scheibenscharen und mit einer Einrichtung zur Begrenzung der Arbeitstiefe der Scheibenschare (15),
**dadurch gekennzeichnet,**
**dass** ein äußeres Rohr (21) und ein inneres Rohr (31) vorgesehen sind, die relativ zueinander verschiebbar sind,
**dass** an dem äußeren Rohr (31) die Scheibenschare (15) mittelbar oder unmittelbar angebracht und um eine horizontale Achse drehbar angeordnet sind,
**dass** an dem inneren Rohr (31) ein oder mehrere Stützräder (35) mittelbar oder unmittelbar angebracht und angeordnet sind, die auf einer Bodenoberfläche (10) abrollen,
**dass** das äußere Rohr (21) und das innere Rohr (31) selbst oder über Umlenkelemente einen Winkel α mit der Bodenoberfläche (10) einschließen, und
**dass** die Verschiebung des inneren Rohres (31) im äußeren Rohr (21) mittels einer Einstelleinrichtung (41, 42) einstellbar ist.

2. Bodenbearbeitungseinrichtung mit Meißelscharen und mit einer Einrichtung zur Begrenzung der Arbeitstiefe der Meißelschare,
**dadurch gekennzeichnet,**
**dass** ein äußeres Rohr (21) und ein inneres Rohr (31) vorgesehen sind, die relativ zueinander verschiebbar sind,
**dass** an dem äußeren Rohr (21) die Meißelschare fest oder um eine horizontale Achse schwenkbar angeordnet sind,
**dass** an dem inneren Rohr (31) ein oder mehrere Stützräder (35) mittelbar oder unmittelbar angebracht und angeordnet sind, die auf einer Bodenoberfläche (10) abrollen,
**dass** das äußere Rohr (21) und das innere Rohr (31) selbst oder über Umlenkelemente einen Winkel α mit der Bodenoberfläche (10) einschließen, und
**dass** die Verschiebung des inneren Rohres (31) im äußeren Rohr (21) mittels einer Einstelleinrichtung (41, 42) einstellbar ist.

3. Bodenbearbeitungseinrichtung nach Anspruch 1 oder 2,
**dadurch gekennzeichnet,**
**dass** die Bodenbearbeitungseinrichtung eine Sämaschine und die Scheibenschare Scheibensäschare oder die Meißelschare, Meißelsäschare sind.

4. Bodenbearbeitungseinrichtung nach einem der vorhergehenden Ansprüche,
**dadurch gekennzeichnet,**
**dass** das innere Rohr (31) gegenüber dem äußeren Rohr (21) mittels einer Federeinrichtung (41) vorgespannt ist.

5. Bodenbearbeitungseinrichtung nach Anspruch 4,
**dadurch gekennzeichnet,**
**dass** die Federeinrichtung (41) eine Spiralfeder ist, die zwischen einem oberen Ende (33) des inneren Rohres (31) und dem oberen Ende (23) des äußeren Rohres (21) vorgespannt ist.

6. Bodenbearbeitungseinrichtung nach einem der vorstehenden Ansprüche,
**dadurch gekennzeichnet,**
**dass** das innere Rohr (31) mittels einer Verlängerungseinrichtung (42) durch das obere Ende (23) des äußeren Rohres (21) herausragt, wobei auf die Verlängerungseinrichtung (42) Zugkräfte aufbringbar sind.

7. Bodenbearbeitungseinrichtung nach einem der vorstehenden Ansprüche,
**dadurch gekennzeichnet,**
**dass** eine erste Welle (51) vorgesehen ist, die über eine zweite Federeinrichtung (52) mit dem äußeren Rohr (21) verbunden ist, sodass eine Drehung der ersten Welle (51) eine Erhöhung des Bodendrucks der Scheibenschare (15) bewirkt.

8. Bodenbearbeitungseinrichtung nach Anspruch 7,
**dadurch gekennzeichnet,**
**dass** eine Vielzahl von inneren und äußeren Rohren (31, 21) parallel zueinander vorgesehen sind, die über die gleiche Welle (51) hinsichtlich des Bodendrucks der Scheibenschare (15) einstellbar sind.

9. Bodenbearbeitungseinrichtung nach Anspruch 7 oder 8,
**dadurch gekennzeichnet,**
**dass** die zweite Federeinrichtung (52) eine Blattfeder ist.

10. Bodenbearbeitungseinrichtung nach einem der Ansprüche 6 bis 9,
**dadurch gekennzeichnet,**
**dass** eine zweite Welle vorgesehen ist, mit der Zugkräfte auf die Verlängerungseinrichtungen (42) ausgeübt werden können.

11. Bodenbearbeitungseinrichtung nach einem der vorstehenden Ansprüche,
**dadurch gekennzeichnet,**
**dass** an jeder Kombination aus einem äußeren Rohr (21) und einem inneren Rohr (31) zwei Scheibenschare (15) und/oder zwei Stützräder (35) angebracht sind.

12. Bodenbearbeitungseinrichtung nach Anspruch 11,
**dadurch gekennzeichnet,**
**dass** die an einer Kombination aus einem äußeren Rohr (21) und einem inneren Rohr (31) angebrachten beiden Scheibenschare (15) in Vorfahrtrichtung gesehen zueinander versetzt sind,
**dass** die den beiden versetzt zueinander angeordneten Scheibenscharen (15) zugeordneten Stützräder (35) ebenfalls und um den gleichen Abstand zueinander versetzt sind, und
**dass** eine Umlenkeinrichtung (60) vorgesehen ist, welche eine zueinander synchrone Auf- oder Abwärtsbewegung der beiden Stützräder (35) relativ zu den zugeordneten Scheibenscharen (15) bewirkt.

13. Bodenbearbeitungseinrichtung nach Anspruch 12,
**dadurch gekennzeichnet,**
**dass** die zweite Federeinrichtung (52) Teil einer Parallelogrammanordnung (A, B, C, D) ist.

14. Bodenbearbeitungseinrichtung nach einem der Ansprüche 12 bis 13,
**dadurch gekennzeichnet,**
**dass** das untere Ende (22) des äußeren Rohres (21) über ein Hebelelement (K) einerseits mit den Stützrädern (35) und andererseits mit den Scheibenscharen (15) verbunden ist.
